# EUROPÄISCHE PATENTSCHRIFT

(11) **EP 1 643 605 B1**
(45) Veröffentlichungstag und Bekanntmachung des Hinweises auf die Patenterteilung: **06.06.2007**
(21) Anmeldenummer: 05020427.0
(22) Anmeldetag: 20.09.2005
(51) Int. Cl.: H02G 3/12

(54) **Geräteeinbaurahmen für Geräteeinbaukanäle**
Apparatus mounting frame for raceways
Cadre de montage d'appareils pour canalisations à appareils incorporés

(30) Priorität: 30.09.2004 DE 202004015183 U
(43) Veröffentlichungstag der Anmeldung: 05.04.2006
(73) Patentinhaber: Tehalit GmbH, 67716 Heltersberg (DE)
(72) Erfinder: Arnold, Hans-Joachim, 67706 Krickenbach (DE); Moschenros, Michel, 67240 Kurtzenhouse (FR)
(74) Vertreter: Patentanwälte Möll und Bitterich

(56) Entgegenhaltungen:
- FR-A- 2 544 243
- US-A1- 2002 050 553

## Beschreibung

Die Erfindung betrifft Geräteeinbaurahmen für den frontrastenden Einbau von Elektro-Installationsgeräten in Geräteeinbaukanäle gemäß dem Oberbegriff des Anspruchs 1.

Der frontrastende Einbau von Elektro-Installationsgeräten in Kabelkanäle mit U- oder C-förmigem Querschnitt stellt erhebliche Anforderungen an den Konstrukteur. Einerseits sollen die Geräte und Geräteeinbaurahmen leicht zu montieren und zu demontieren sein, auf der anderen Seite müssen sie erheblichen Kräften standhalten. Dies gilt insbesondere für Steckdosen. Konstruktionen, die die geforderte Festigkeit bieten, sind bekannt aus DE 78 03 34 U, EP 0 913 902 A, EP 1 271 734 A, EP 0 844 714 A oder EP 1 059 719 B.

Wie insbesondere die beiden letztgenannten Schriften zeigen, bedarf es besonderer Konstruktionen und Hilfsmittel, beispielsweise Schrauben oder Klammern, um die Festigkeit der Installationsgeräte bzw. der Geräteeinbaurahmen im Kanalunterteil zu garantieren. Diese Hilfsmittel verhindern jedoch die einfache Montage und insbesondere Demontage. Außerdem verhindern sie die seitliche Justierung der Geräte bzw. Geräteeinbaurahmen.

Ein weiterer Nachteil der bekannten Einbaurahmen besteht darin, dass es nicht möglich ist, bereits verdrahtete Installationsgeräte nachträglich einzubauen. Der Installateur muss vielmehr zunächst die Geräte von den Kabeln trennen, das Gerät in den Einbaurahmen einbauen und anschließend die Kabelenden wieder anschließen.

Einer Geräte einbaurahmen gemäß den Oberbegriff des Anspruchs 1 is aus FR-A-2 544 243 bekannt.

Der vorliegenden Erfindung liegt die Aufgabe zugrunde, einen Geräteeinbaurahmen anzugeben, der einfach zu montieren, einfach zu justieren und einfach zu demontieren ist, der auch hohen Auszugskräften Widerstand leistet und der den nachträglichen Einbau bereits verdrahteter Installationsgeräte ermöglicht.

Diese Aufgabe wird gelöst durch einen Geräteeinbaurahmen mit den Merkmalen des Anspruchs 1.

Die vorliegende Erfindung beruht auf dem Prinzip, den Geräteeinbaurahmen aus zwei etwa U-förmigen Rahmenteilen zusammenzustecken, wobei die Rahmenteile gegeneinander verschiebbar sind. Die Zweiteiligkeit hat den Vorteil, dass bereits verdrahtete Installationsgeräte nachträglich eingebaut werden können. Die Verschiebbarkeit der Rahmenteile gegeneinander erlaubt es in einfachster Weise, die Verbindung zu den Deckelhalteprofilen des Kanalunterteils zu aktivieren oder zu deaktivieren. Sobald der Geräteeinbaurahmen in seiner endgültigen Position sitzt, werden die beiden Rahmenteile gegenseitig fixiert und sitzen dann unverrückbar fest.

Gemäß einer vorteilhaften Weiterbildung der Erfindung sind die beiden Rahmenteile identisch. Dies ergibt eine zusätzliche Ersparnis bei der Produktion.

Um eine einfache Fixierung des Geräteeinbaurahmens in der End- bzw. Betriebsstellung zu ermöglichen, können an den Rahmenteilen Fixierösen angeformt sein, die in der Endstellung fluchten.

Vorteilhafterweise sind die Fixierösen für eine Fixierschraube dimensioniert. Dabei kann die Fixierschraube dieselbe Schraube sein, mit der das Installationsgerät am Geräteeinbaurahmen angeschraubt wird.

Es versteht sich, dass die Haltenasen, mit deren Hilfe der Geräteeinbaurahmen am Geräteeinbaukanal fixiert wird, an dessen Deckelhalteprofile angepasst sein müssen.

Gemäß einer ersten Variante ist unter der Frontplatte eine Haltenase angeformt, die das Deckelhalteprofil von außen übergreift. In diesem Fall erfolgt die Fixierung des Geräteeinbaurahmens am Kanalunterteil durch Zusammenschieben der beiden Rahmenteile.

Alternativ oder auch in Kombination dazu können zum gleichen Zweck an den U-Schenkeln der Rahmenteile weitere Haltenasen angeformt sein, die das Deckelhalteprofil von innen untergreifen. In diesem Fall erfolgt die Fixierung durch Auseinanderschieben der Rahmenteile.

Oftmals besteht die Notwendigkeit, mehrere Installationsgeräte nebeneinander anzubringen, beispielsweise mehrere Steckdosen, Lichtschalter, usw. Damit diese mehreren Installationsgeräte normgerechte Abstände einhalten, bietet die Industrie häufig Mehrfach-Geräteeinbaurahmen an. Dies hat jedoch zur Konsequenz, dass der Installateur schon von vornherein wissen muss, wie viele Steckdosen, Lichtschalter usw. benötigt werden. Andernfalls muss er zum Nachrüsten die bestehenden Geräteeinbaurahmen ausbauen und durch neue, größere ersetzen. Das ist unbefriedigend, insbesondere weil wie eingangs erwähnt die herkömmlichen Einbaurahmen den nachträglichen Einbau von bereits verdrahteten Installationsgeräten nicht erlauben.

Die vorliegende Erfindung geht aus von Geräteeinbaurahmen, die für jeweils ein einziges Installationsgerät bestimmt sind und lückenlos nebeneinander angereiht werden. Um nun zu verhindern, dass beim losen Anreihen unschöne Spalte entstehen, ist an der Außenseite des einen U-Schenkels der Rahmenteile ein Rasthaken und eine Rastöffnung eingeformt. Rasthaken und Rastöffnung benachbarter Geräteeinbaurahmen bewirken eine enge, jedoch lösbare Rastverbindung.

Um die Rastverbindung noch einfacher herstellen bzw. lösen zu können, besitzt die Rastöffnung vorteilhafterweise eine stufige Kontur. Das Fixieren und Lösen erfolgt dann durch eine Parallelverschiebung der benachbarten Geräteeinbaurahmen.

Werden die Rasthaken so positioniert, dass sie die Unterkante der anschließenden Kanaldeckel berühren, dienen sie gleichzeitig als Stütze für die Kanaldeckel.

Anhand der Zeichnung soll die Erfindung in Form von Ausführungsbeispielen näher erläutert werden. Es zeigen
- Fig. 1: in isometrischer Darstellung einen ersten Geräteeinbaurahmen,
- Fig. 2: einen Querschnitt durch einen ersten Geräteeinbaukanal mit eingesetztem, noch nicht fixiertem Geräteeinbaurahmen gemäß Fig. 1,
- Fig. 3: einen zweiten Geräteeinbaukanal mit einem lose aufgesetzten zweiten Geräteeinbaurahmen,
- Fig. 4: in vergrößertem Maßstab einen Ausschnitt aus Fig. 3 im Bereich des Deckelhalteprofils,
- Fig. 5: in isometrischer Darstellung und als Ausschnitt die Innenseite der U-Schenkel des Geräteeinbaurahmens der Fig. 3 und
- Fig. 6: in isometrischer Darstellung und als Ausschnitt die Außenseite der U-Schenkel des Geräteeinbaurahmens der Fig. 3.

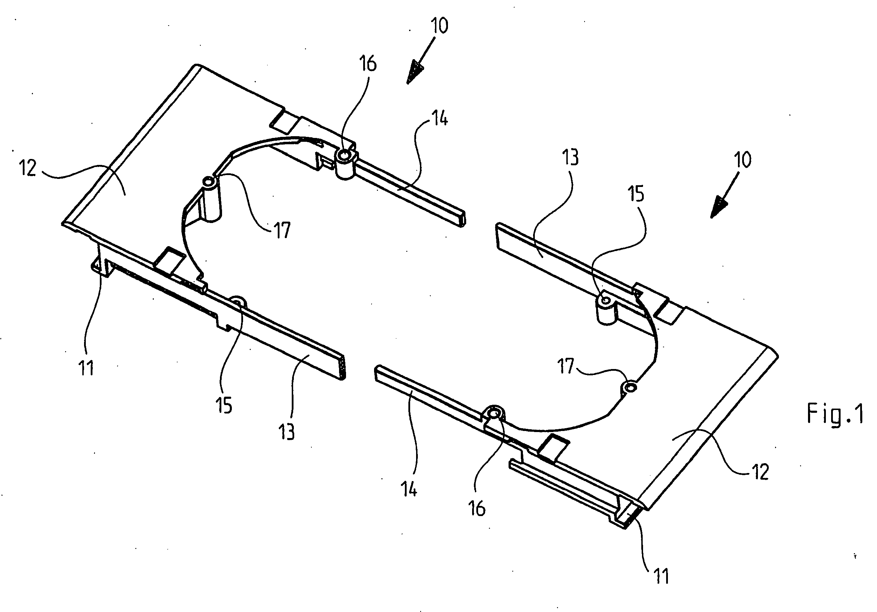

Fig. 1 zeigt in isometrischer Darstellung zwei Rahmenteile 10, aus denen durch Zusammenstecken ein Geräteeinbaurahmen entsteht. Die beiden Rahmenteile 10 sind identisch, was die Produktion vereinfacht.

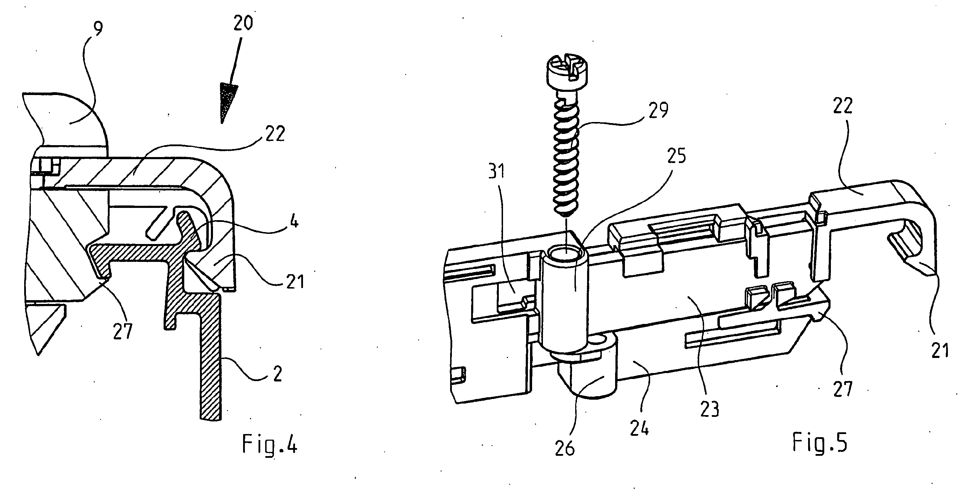

Jedes Rahmenteil 10 besitzt eine Frontplatte 12, an deren Unterseite Haltenasen 11 vorgesehen sind. Die Rahmenteile 10 sind etwa U-förmig. Sie sind zusammensteckbar, wobei die U-Schenkel 13, 14 gegeneinander gleiten. Um die beiden Rahmenteile 10 in der Endposition gegenseitig fixieren zu können, sind an den U-Schenkeln 13, 14 Fixierösen 15, 16 vorgesehen, die in der Endstellung fluchten und z. B. mit Hilfe einer Fixierschraube 29 (Fig. 5) fixiert werden können. Die Fixierschrauben 29 dienen ebenfalls dazu, ein Elektro-Installationsgerät (Fig. 4) zu befestigen. Um das Installationsgerät bei Bedarf auch mit vier Schrauben befestigen zu können, sind weitere Schraubösen 17 vorgesehen.

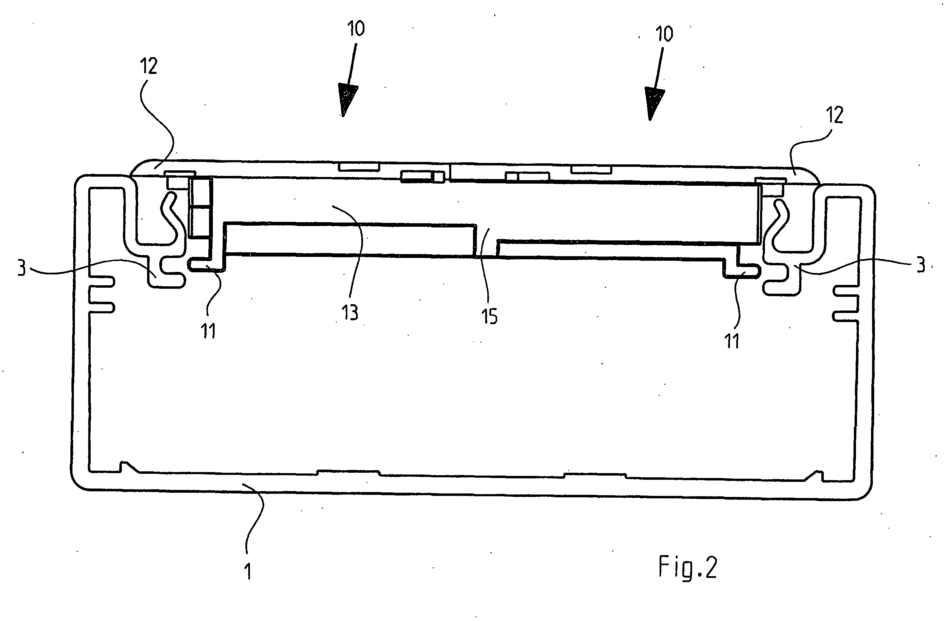

Fig. 2 zeigt einen Querschnitt durch einen ersten Geräteeinbaukanal 1 mit etwa C-förmigem Querschnitt. Deckelhalteprofile 3 dienen zum Aufsetzen eines Kanaldeckels (nicht dargestellt). Auf die Deckelhalteprofile 3 aufgesetzt erkennt man den Geräteeinbaurahmen der Fig. 1. Die beiden Rahmenteile 10 sind ganz zusammengeschoben. Die Frontplatte 12 liegt lose auf dem Kanal 1 auf. Die Haltenasen 11 an der Unterseite der Frontplatten 12 haben noch keinen Kontakt mit den Deckelhalteprofilen 3. Die Verankerung des Geräteeinbaurahmens 10 an den Deckelhalteprofilen 3 erfolgt durch Auseinanderschieben der beiden Rahmenteile 10, die in der End- oder Betriebsstellung durch Fixierschrauben 29 (Fig. 5) fixiert werden.

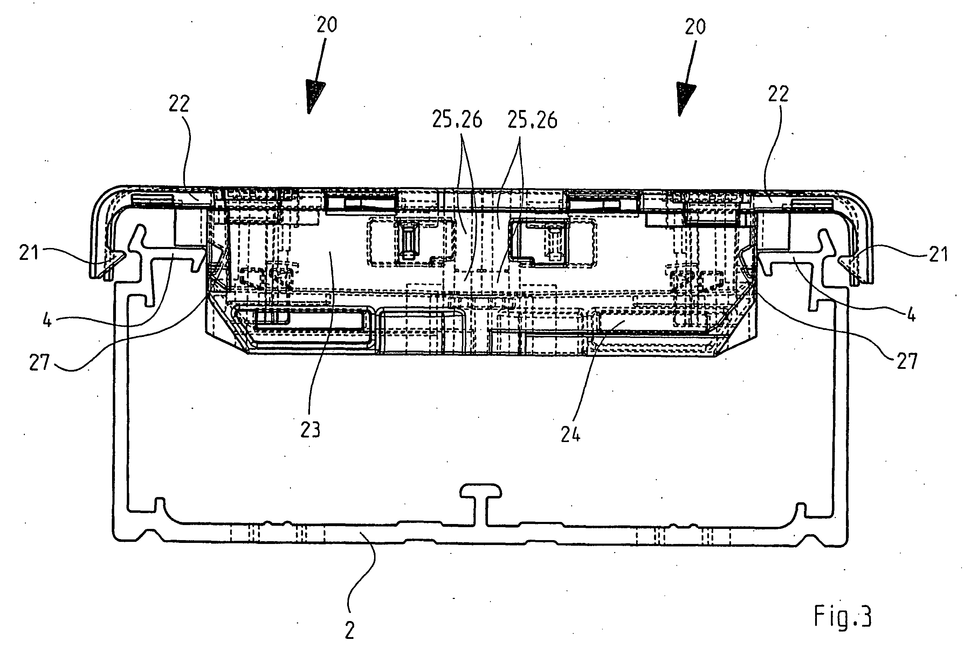

Fig. 3 zeigt einen Querschnitt durch einen geänderten Geräteeinbaukanal 2 mit U-förmigem Querschnitt und Deckelhalteprofilen 4. Auf die Deckelhalteprofile 4 aufgelegt erkennt man einen Geräteeinbaurahmen, der ebenfalls aus zwei identischen U-förmigen Rahmenteilen 20 zusammengesteckt ist. An den Frontplatten 22 sind erste Haltenasen 21 angeformt, die die Deckelhalteprofile 4 von außen übergreifen. Zusätzlich sind an den freien Enden der U-Schenkel 23, 24 weitere Haltenasen 27 angeformt, die das Deckelhalteprofil 4 von innen untergreifen.

Fig. 4 zeigt die End- oder Betriebsstellung des zweiten Geräteeinbaurahmens 20 als Ausschnitt und in vergrößerter Darstellung. Die Haltenasen 21, 27 umgreifen das Deckelhalteprofil 4 zangenartig, wodurch sich ein besonders fester Halt mit hohen Auszugskräften ergibt.

Fig. 5 zeigt in isometrischer Darstellung und als Ausschnitt einen Blick auf die Innenseite der Schenkel 23, 24 des zweiten Geräteeinbaurahmens. Man erkennt die beiden Haltenasen 21, 27. Ebenfalls erkennt man die beiden Fixierösen 25, 26, die fluchten, sobald die beiden Rahmenteile 20 (Fig. 3) ihre End- bzw. Betriebsstellung einnehmen. Um die Rahmenteile 20 in dieser Position zu fixieren, ist die Fixierschraube 29 vorgesehen, die wie schon erwähnt auch gleichzeitig zur Befestigung eines ElektroInstallationsgerätes 9 (Fig. 4) dienen kann.

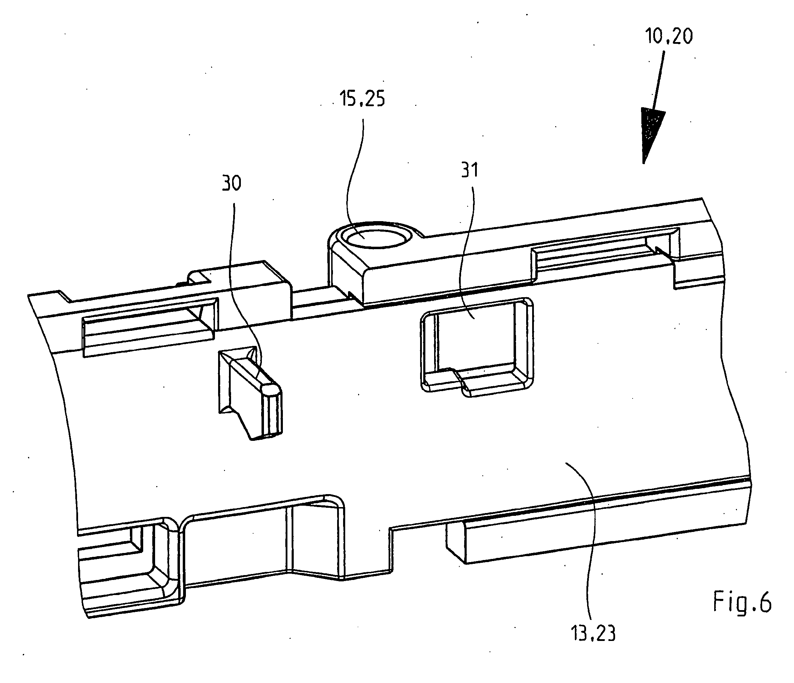

Fig. 6 zeigt in isometrischer Darstellung und als Ausschnitt die Außenseite des U-Schenkels 13, 23 des ersten oder auch zweiten Geräteeinbaurahmens. Man erkennt einen Rasthaken 30, der vom Schenkel 13, 23 rechtwinklig absteht und an seiner Unterseite eine kleine Nase aufweist. Neben dem Rasthaken 30 ist eine Rastöffnung 31 in den Schenkel 13, 23 eingeformt. Sobald ein zweiter Geräteeinbaurahmen lückenlos an den ersten Geräteeinbaurahmen angereiht wird, greifen die Rasthaken 30 des einen Geräteeinbaurahmens in die Rastöffnungen 31 des jeweils benachbarten Geräteeinbaurahmens ein, wodurch die beiden Geräteeinbaurahmen ohne störenden Spalt fixiert werden.

Um die Montage und Demontage zu erleichtern, ist die Rastöffnung 31 mit einem Stufenprofil ausgerüstet. Zum Aktivieren und Deaktivieren der Rastverbindung werden die benachbarten Geräteeinbaurahmen parallel verschoben.

## Patentansprüche

1. Geräteeinbaurahmen für den frontrastenden Einbau in Geräteeinbaukanäle (1, 2) mit Deckelhalteprofilen (3, 4), umfassend
- eine Frontplatte (12, 22) mit einer Öffnung für die Montage eines Elektroinstallationsgerätes (9),
- und Haltenasen (11; 21, 27) unter der Frontplatte (12, 22), die mit den Deckelhalteprofilen (3, 4) kooperieren,
**gekennzeichnet durch** die Merkmale:
- der Geräteeinbaurahmen besteht aus zwei etwa U-förmigen Rahmenteilen (10, 20),
- die Rahmenteile (10, 20) sind
- zusammensteckbar,
- gegeneinander verschiebbar
- und in der Endstellung gegenseitig fixierbar.

2. Geräteeinbaurahmen nach Anspruch 1, **gekennzeichnet durch** das Merkmal:
- die beiden Rahmenteile (10, 20) sind identisch.

3. Geräteeinbaurahmen nach Anspruch 1 oder 2, **gekennzeichnet durch** das Merkmal:
- an den Rahmenteilen (10, 20) sind Fixierösen (15, 16; 25, 26) angeformt, die in der Endstellung fluchten.

4. Geräteeinbaurahmen nach Anspruch 3, **gekennzeichnet durch** das Merkmal:
- die Fixierösen (15, 16; 25, 26) sind für eine Fixierschraube (29) dimensioniert.

5. Geräteeinbaurahmen nach einem der Ansprüche 1 bis 4, **gekennzeichnet durch** das Merkmal:
- an der Frontplatte (22) ist eine Haltenase (21) angeformt, die das Deckelhalteprofil (4) von außen übergreift.

6. Geräteeinbaurahmen nach einem der Ansprüche 1 bis 5, **gekennzeichnet durch** das Merkmal:
- an den U-Schenkeln (13, 14; 23, 24) der Rahmenteile (10, 20) sind Haltenasen (27) angeformt, die das Deckelhalteprofil (4) von innen untergreifen.

7. Geräteeinbaurahmen nach einem der Ansprüche 1 bis 6, **gekennzeichnet durch** die Merkmale:
- an der Außenseite des U-Schenkels (13, 23) der Rahmenteile (10, 20) ist ein Rasthaken (30) angeformt,
- in den U-Schenkel (13, 23) ist neben dem Rasthaken (30) eine Rastöffnung (31) eingeformt,
- Rasthaken (30) und Rastöffnungen (31) benachbarter Geräteeinbaurahmen bewirken eine enge, lösbare Verbindung.

8. Geräteeinbaurahmen nach Anspruch 7, **gekennzeichnet durch** das Merkmal:
- die Rastöffnung (31) besitzt eine stufige Kontur.

9. Geräteeinbaurahmen nach Anspruch 7 oder 8, **gekennzeichnet durch** das Merkmal:
- der Rasthaken (30) dient auch als Stütze für einen Kanaldeckel.

## Claims

1. Apparatus installation frame for front-locking installation in apparatus installation trunking (1, 2) with cover retaining profiles (3, 4), comprising
- a front plate (12, 22) with an opening for mounting an electrical installation apparatus (9),
- and retaining lugs (11; 21, 27) below the front plate (12, 22) which co-operate with the cover retaining profiles (3, 4),
**characterised by** the features:
- the apparatus installation frame consists of two approximately U-shaped frame parts (10, 20),
- the frame parts (10, 20) can be
- fitted together,
- displaced with respect to one another
- and fixed relative to one another in the end position.

2. Apparatus installation frame according to Claim 1,
**characterised by** the feature:
- the two frame parts (10, 20) are identical.

3. Apparatus installation frame according to Claim 1 or 2,
**characterised by** the feature:
- fixing eyes (15, 16; 25, 26) are formed on the frame parts (10, 20), which eyes are aligned in the end position.

4. Apparatus installation frame according to Claim 3,
**characterised by** the feature:
- the fixing eyes (15, 16; 25, 26) are dimensioned for a fixing screw (29).

5. Apparatus installation frame according to any one of Claims 1 to 4, **characterised by** the feature:
- a retaining lug (21) is formed on the front plate (22), which lug engages over the cover retaining profile (4) from outside.

6. Apparatus installation frame according to any one of Claims 1 to 5, **characterised by** the feature:
- retaining lugs (27) are formed on the U-legs (13, 14; 23, 24) of the frame parts (10, 20), which lugs engage under the cover retaining profile (4) from inside.

7. Apparatus installation frame according to any one of Claims 1 to 6, **characterised by** the features:
- a locking hook (30) is formed on the outside of the U-leg (13, 23) of the frame parts (10, 20),
- a locking opening (31) is formed into the U-leg (13, 23) near the locking hook (30),
- locking hooks (30) and locking openings (31) of adjacent apparatus installation frames produce a tight, releasable connection.

8. Apparatus installation frame according to Claim 7,
**characterised by** the feature:
- the locking opening (31) has a stepped contour.

9. Apparatus installation frame according to Claim 7 or 8,
**characterised by** the feature:
- the locking hook (30) also serves as a support for a trunking cover.

## Revendications

1. Cadre de montage d'appareils pour le montage par enclenchement frontal dans des canalisations de montage d'appareils (1, 2) avec des profilés de fixation de couvercle (3, 4), comprenant
- une plaque frontale (12, 22) avec une ouverture pour le montage d'un appareil d'installation électrique (9),
- et des ergots de fixation (11 ; 21, 27) sous la plaque frontale (12, 22) qui coopèrent avec les profilés de fixation de couvercle (3, 4),
**caractérisé en ce que**
- le cadre de montage d'appareils se compose de deux parties de cadre (10, 20) approximativement en forme de U,
- les parties de cadre (10, 20) sont
- emboîtables l'une avec l'autre,
- déplaçables l'une par rapport à l'autre
- et fixables mutuellement dans la position finale.

2. Cadre de montage d'appareils selon la revendication 1, **caractérisé en ce que**
- les deux parties de cadre (10, 20) sont identiques.

3. Cadre de montage d'appareils selon la revendication 1 ou 2, **caractérisé en ce que**
- des oeillets de fixation (15, 16 ; 25, 26), qui sont alignés dans la position finale, sont formés sur les parties de cadre (10, 20).

4. Cadre de montage d'appareils selon la revendication 3, **caractérisé en ce que**
- les oeillets de fixation (15, 16 ; 25, 26) sont dimensionnés pour une vis de fixation (29).

5. Cadre de montage d'appareils selon l'une des revendications 1 à 4, **caractérisé en ce que**
- un ergot de fixation (21) qui vient en prise sur le profilé de fixation de couvercle (4) par l'extérieur est formé sur la plaque frontale (22).

6. Cadre de montage d'appareils selon l'une des revendications 1 à 5, **caractérisé en ce que**
- des ergots de fixation (27) qui viennent en prise sous le profilé de fixation de couvercle (4) par l'intérieur sont formés sur les branches en U (13, 14 ; 23, 24) des parties de cadre (10, 20).

7. Cadre de montage d'appareils selon l'une des revendications 1 à 6, **caractérisé en ce que**
- un crochet de crantage (30) est formé sur le côté extérieur de la branche en U (13, 23) des parties de cadre (10, 20),
- une ouverture de crantage (31) est formée dans la branche en U (13, 23) à côté du crochet de crantage (30),
- crochets de crantage (30) et ouvertures de crantage (31) de cadres de montage d'appareils adjacents produisent une liaison étroite amovible.

8. Cadre de montage d'appareils selon la revendication 7, **caractérisé en ce que**
- l'ouverture de crantage (31) possède un contour étagé.

9. Cadre de montage d'appareils selon la revendication 7 ou 8, **caractérisé en ce que**
- le crochet de crantage (30) sert aussi de soutien pour un couvercle de canalisation.
